# EUROPEAN PATENT SPECIFICATION

(11) **EP 3 388 262 B1**
(45) Date of publication and mention of the grant of the patent: **26.06.2019**
(21) Application number: 18165884.0
(22) Date of filing: 05.04.2018
(51) Int. Cl.: B60C 25/00, G01M 17/02, G01B 11/22, G06T 1/00, G06T 7/00, G06K 9/78, G06K 9/20

(54) **METHOD AND APPARATUS FOR CHECKING VEHICLE WHEEL TYRES**
VERFAHREN UND VORRICHTUNG ZUR PRÜFUNG VON FAHRZEUGRADREIFEN
PROCÉDÉ ET APPAREIL DE VÉRIFICATION DE PNEUS DE ROUES DE VÉHICULE

(30) Priority: 10.04.2017 IT 201700039288
(43) Date of publication of application: 17.10.2018
(60) Divisional application: 19174612.2
(73) Proprietor: NEXION S.p.A., 42015 Correggio (RE) (IT)
(72) Inventor: CORGHI, Giulio, 42015 Correggio (Reggio Emilia) (IT)
(74) Representative: Conti, Marco

(56) References cited:
- WO-A1-2009/056392
- JP-A- 2003 121 111
- US-A1- 2012 020 526
- US-A1- 2016 127 625
- Sirius Advanced Cybernetics GmbH: "3D-Reifenkontrolle - SAC führt Sie ans Ziel Profiltiefe & Typerkennung", , 2 February 2011 (2011-02-02), XP002777459, Retrieved from the Internet: URL:https://www.pressebox.de/pressemitteil ung/sac-sirius-advanced-cybernetics-gmbh/3 D-Reifenkontrolle-SAC-fuehrt-Sie-ans-Ziel- Profiltiefe-Typerkennung/boxid/402247 [retrieved on 2018-01-19]
- Sirius Advanced Cybernetics GmbH: "Bildverarbeitung mit 3D Reifenkontrolle- Profiltiefe & Typerkennung", , XP002777460, Retrieved from the Internet: URL:https://www.sac-vision.net/share/deuts ch/applikationsberichte/3D_Reifenkontrolle .pdf [retrieved on 2018-01-19]

## Description

This invention relates to a method and an apparatus for checking the tyres on wheels of a vehicle.

The invention addresses the sector of equipment for tyre mechanics. More specifically, the invention relates to equipment used to check the wheels of a vehicle while the wheels are mounted on the vehicle. Apparatuses of this kind include, for example, vehicle attitude detectors or other apparatuses used to carry out preliminary checks on the wheels.

In this context, a wheel comprises a rim and a tyre coupled to the rim.

In this trade, a need felt by tyre mechanics and technical supervisors of vehicle inspection lines is that of being able to check whether the tyres mounted on a vehicle are tyres approved for that particular vehicle.

This check should be carried out before starting the actual inspection so that the operator doesn't waste time on vehicles with non-approved tyres on their wheels.

The check can be carried out visually by tyre mechanics themselves but is time consuming and involves considerable physical strain because the tyre's identification details are located on the sidewall of the tyre and are not easy to see.

Patent documents EP1207061B9 and ITMI2015A000101 provide equipment (tyre changing machines) equipped with rotary wheel-holder units and devices for automatically reading and analysing tyre sidewalls. These solutions, however, require removing the wheels from the vehicle. Moreover, these systems are not entirely reliable in recognizing the identification codes.

Patent document US20160127625A1 describes optical devices configured to scan the sidewall of the tyre of a wheel mounted on a moving vehicle. The system is, however, complex and not very reliable because the risk of error in the automatic code recognition system is particularly high.

Other examples of devices for checking the tyres of vehicle wheels are disclosed in the following patent documents: WO2009/056392A1, JP2003121111A, US201202526A1 and XP002777459 showing an internet publication from Sirius Advanced Cybernetics GmbH showing a solution for checking tyres in a mounting process.

This invention has for an aim to provide a method and an apparatus for checking the tyres of vehicle wheels to overcome the abovementioned drawbacks of the prior art.

More specifically, the aim of this invention is to provide a particularly simple, easy-to-use and reliable method and apparatus for checking the tyres of a vehicle wheel.

A further aim of the invention is to provide a tyre checking apparatus which is more economical than prior art solutions.

These aims are fully achieved by the method and apparatus of this invention as characterized in the appended claims 1 and 10.

The method of this description is a method according to claim 1 for checking the tyres on the wheels of a vehicle; that is to say, it is a method for checking a wheeled vehicle, with particular reference to the tyres mounted on the vehicle wheels.

The method comprises a step of capturing image information from a sidewall of the tyre of at least one first wheel using at least a first optical device. According to the invention, this capturing step also includes capturing corresponding image information from a sidewall of the tyre of a second wheel using at least a second optical device; the first and second wheels being mounted on a single axle of the vehicle.

This capturing step is carried out when (while) the vehicle is at a first operating position, where the first and second wheels (on that vehicle axle) are positioned at a first and a second check station, respectively.

According to the invention, the first and second check stations are located along two corresponding tracks running parallel to each other and oriented in a longitudinal direction.

In order to identify the tyres, several embodiments are envisaged. In at least one embodiment, it is envisaged that a user, for example a tyre dealer, plays an active role, visualizing said image information on a screen.

The method also comprises, for the at least one first wheel, a step of displaying the image information on a screen. According to the invention, the information is displayed in real time, the moment it is captured; in another embodiment, the data captured might be stored and displayed at a later stage.

The screen is positioned to allow convenient viewing by a user. The image information displayed on the screen provides the user (in real time in at least one embodiment) with image data representing an identification code appearing on the tyres to indicate their type.

In effect, the identification code is printed on the sidewall of the tyre. It is therefore very easy for the user to check what type of tyre is mounted on the vehicle because the code is displayed directly on a screen (and can be seen without having to bend down to the level of the tyre sidewall).

In one embodiment, for each of the first and second wheels, the displaying step includes displaying (in real time in at least one embodiment) the respective image information on the screen to provide the user with image data representing the identification codes appearing on the tyres of the first and second wheels.

It is also envisaged, in at least a possible embodiment, that the tyres are automatically identified by means of a software, on the basis of the captured image information.

In use, therefore, the vehicle is made to advance on the tracks up to the first operating position, that is, until, the first and the second wheel are positioned at the first and the second check station, respectively.

The capturing step includes, for example, a step of illuminating at least one portion of the tyre (a limited part or the whole of the sidewall of the tyre) and a corresponding step of capturing images of the illuminated portion.

At this point, the first and second optical devices capture images of the sidewalls of the respective wheels and transmit them to the screen which (in real time in at least one embodiment) displays the images themselves or other images obtained by processing them (in real time in at least one embodiment).

In one embodiment, during capturing and displaying of the image information, the vehicle is stationary at the first operating position. Alternatively, one or more images of the tyre sidewall might be captured while the vehicle is moving (for example, forward along the tracks).

According to the invention, the method comprises a step of rotating (rotationally driving) the at least one first wheel, or the first and second wheels, each about its own axis of rotation. The rotating step is carried out during the capturing step. In one embodiment, while the wheels are being rotated, the information is captured from them and displayed simultaneously.

Rotation might be effected by means of rollers which grip the corresponding tyres or by means of other power drive systems.

Rotation is thus carried out when the vehicle is at the first operating position.

In one embodiment, the at least one first optical device or the first and second optical devices is/are configured to view a limited part of the sidewall of the respective tyre.

During rotation in use, therefore, the part of the wheel captured moves angularly along a profile of the sidewall of the tyre as a function of wheel rotation.

In another embodiment, the at least one first optical device or the first and second optical devices is/are configured to be able to vary one or more image capturing parameters (for example, exposure time, focussing, illumination time or intensity, etc.). In one embodiment, the method may also include a step whereby the user checks wheel rotation. Thus, the user can check the angular position of the wheel, with the possibility of determining which part of the tyre is captured and displayed. This allows operators to capture images particularly precisely and to display particularly clear images without problems and to easily and effortlessly identify the optimum conditions for viewing the identification codes.

This checking step may, in one embodiment, include checking the operation of the rollers in response to commands issued by the user; in one embodiment, the rotation of the wheels can be started and stopped by user commands.

In one embodiment, the method allows rotating the wheels in both directions of rotation; the rotation direction can also be reversed by user commands; in other words, the user can reverse the direction of rotation of at least one wheel.

In one embodiment, the method allows reversing the rotation direction of the first and second wheels independently of each other. For this purpose, in one embodiment, each check station includes rollers which are power driven independently and which can therefore be controlled independently of each other.

In a possible embodiment, the method comprises displaying additional information on the screen, besides the image information relating to the sidewall of the tyre (or tyres); more specifically, the additional information includes an image representing one or more type of tyres associated with the vehicle being inspected.

This makes it even easier for the user to check whether the tyres mounted on the vehicle are of the correct type.

In a possible embodiment, the method comprises a step of accessing a database containing archive data representing one or more types of tyres associated with the vehicle being inspected and a step of displaying the archive data on the screen together with the image information.

In one embodiment, all four of the vehicle wheels are checked.

In one embodiment, the images captured are made available and stored as proof that the test has actually been carried out; in an example embodiment, the images captured and stored might be uploaded to a network.

In such case, the method also comprises a step of capturing image information from a sidewall of the tyre of a third and a fourth wheel (mounted on the other vehicle axle) using the first and second optical devices; this is done when the vehicle is at a second operating position, where the third and fourth wheels are positioned in the first and second check stations, respectively.

For each of the third and fourth wheels, the image information is displayed on the screen (in real time in at least one embodiment) in order to provide the user with image data representing an identification code appearing on the tyres to indicate their type.

In one embodiment, other operations are also carried out on the wheels while they are in the check stations (on at least one of the wheels positioned in the first and second check stations).

In one embodiment, the method includes a step of deriving a depth parameter representing the depth of the tyre tread. This step may comprise measuring using optical means or a mechanical probe.

In one embodiment, the method includes a step of deriving a pressure parameter representing the tyre inflation pressure. This step may comprise measuring using a customary tyre pressure measuring system.

This description also provides an apparatus for checking vehicle tyres according to claim 10.

The apparatus comprises at least one first optical device configured to capture image information from a sidewall of the tyre of at least one first wheel.

According to the invention, the apparatus comprises a first and a second optical device configured to capture image information from respective sidewalls of the tyres of the first wheel and of a second wheel on the same axle, respectively.

The apparatus comprises a control unit connected to the at least one first optical device to drive it or connected to the at least one first and one second optical device to drive them.

According to the invention, the apparatus comprises two vehicle tyre contact tracks running parallel to each other and oriented in a longitudinal direction. The first and second optical devices are positioned on the outside of the tracks on opposite sides, in proximity to, and directed towards, corresponding stretches of the tracks. The apparatus includes a first and a second check station in which the wheels are positioned when the vehicle is at a first operating position. When the wheels are positioned in the first and the second check station, respectively, they are visible to the first and the second optical device, respectively.

The apparatus also comprises a screen.

In one embodiment, the screen is connected to the at least one first optical device or to the at least one first and one second optical device. In one embodiment, the screen is connected to the control unit. In one embodiment, the control unit may comprise the screen.

The control unit is programmed to display the image information (at least for the first wheel or for each of the first and second wheels) on the screen (in real time) in order to provide the user with image data representing an identification code appearing on the tyres to indicate their type.

The check stations are configured to drive in rotation the vehicle wheels positioned therein.

The apparatus comprises at least a first and a second motor-driven roller. The first and second rollers are positioned along the first and second tracks and are respectively oriented transversely to the tracks in substantial alignment with the first and the second optical device.

The first and second rollers are configured to be surmounted by the first and second wheels of the vehicle positioned at the first operating position. In one embodiment, each check station includes its own pair of power-driven rollers; each pair of rollers may be independently power-driven. In one embodiment, the power drive of the rollers is configured to allow reversing the direction of rotation.

In one embodiment, the control unit is connected to the power-driven rollers and is configured to start and stop them in response to user commands.

In one embodiment, the control unit is configured to start and stop the power-driven rollers of the first and second check stations independently of each other.

In one embodiment, the control unit is programmed to display corresponding image information on the screen in real time for a third and a fourth wheel mounted on another vehicle axle and resting on the aforementioned stretches of the tracks at a second operating position of the vehicle, in order to provide the user with on-screen image data representing the identification code printed on the tyres of the first, second, third and fourth vehicle wheels.

In one embodiment, the control unit is provided with a memory for storing the images captured. In one embodiment, the control unit is configured to transfer the checking images to a network.

It should be noted that the checking method and apparatus of this description are used for preliminary vehicle wheel checks (of the tyres in particular); the expression "preliminary" is used, for example, to mean prior to a (thorough) check of the state of the vehicle, which might, for example, be the vehicle attitude, a vehicle overhaul or a brake test.

In one possible embodiment, the check according to this description may be carried out in the context of a brake test or when the vehicle is mounted on a vehicle lift. Thus, the apparatus disclosed in this description may form part of a brake test bench or a vehicle lift; the apparatus might, however, also be stand-alone, that is, dedicated specifically to this check.

According to another aspect of this description, the method and apparatus disclosed herein might be configured to allow the user (the operator of an overhaul line or the tyre mechanic) to carry out further operations (activities), besides that of checking whether the tyre mounted on a vehicle is suitable for that vehicle.

In a possible embodiment, one of these further possible operations (activities) is checking (measuring) the depth of the tyre tread.

In addition, or alternatively, in a possible embodiment, one of these further possible operations (activities) is checking (measuring) the tyre pressure.

There are different approaches to enabling a user to personally view the type of tyre on a screen in order to check it against the specifications for the type of vehicle being inspected.

In one embodiment, an image is displayed on the screen representing the entire sidewall of the tyre.

In this case, image data processing technology is used which allows the user to act on the image through an interface (for example, a computer keyboard or mouse, or touch functions on a touch screen). For example, the control unit is programmed to allow the user to rotate the image and/or to enlarge a detail thereof.

In one embodiment, an image is displayed on the screen representing a limited part of the sidewall of the tyre. In one possible embodiment, the part of the tyre sidewall displayed corresponds to an angular sector of the sidewall.

In one embodiment, the circular crown (or a part of it) of the image representing the tyre sidewall is "straightened", or linearized, so that it is easier for the operator to read the information printed on the tyre. Where the image represents a limited part of the tyre sidewall, the image appearing on the screen is modified in real time as the wheel is rotated while the optical device remains stationary relative to the rotation of the wheel about its own axis.

The control unit is also programmed to allow the user to select and/or store the image displayed on the screen in a file memory.

Further, a plurality of images, each relating to a corresponding portion of the tyre sidewall, can be captured and then processed to form an overall image of the tyre sidewall (to be displayed on the screen) or (using digital processing techniques) to automatically select from the plurality of images the image which shows the identification code of the tyre (and then display only the selected image on the screen).

In one embodiment, the images captured are processed (for example, using optical character recognition - OCR - technology) in order to automatically derive the data of interest (for example, the reference code representing the type of tyre).

In one embodiment, the control unit has access to a database containing information (for example the information in the vehicle registration document) of a plurality of vehicles. That way, the control unit can be programmed to display on screen the reference data of the vehicle being inspected, for example a scan of at least part of the vehicle's registration document, using a graphical interface containing the data stored in the database or in another form.

Thus, in one embodiment, the screen displays the part of the image of the tyre sidewall with the identification code and, simultaneously, the reference data of the vehicle (for example, the part of the registration document) relating to the type of tyres approved for that vehicle.

In one embodiment, the control unit is programmed to process the image data captured from the tyre and the data selected from the database in order to automatically check that the tyre actually mounted matches the type stated in the registration document; in such case, the control unit is programmed to inform the user of the result of the check (for example, with a "traffic light" indicator on screen).

This and other features of the invention will become more apparent from the following description of a preferred embodiment of it, illustrated purely by way of example in the accompanying drawings, in which:

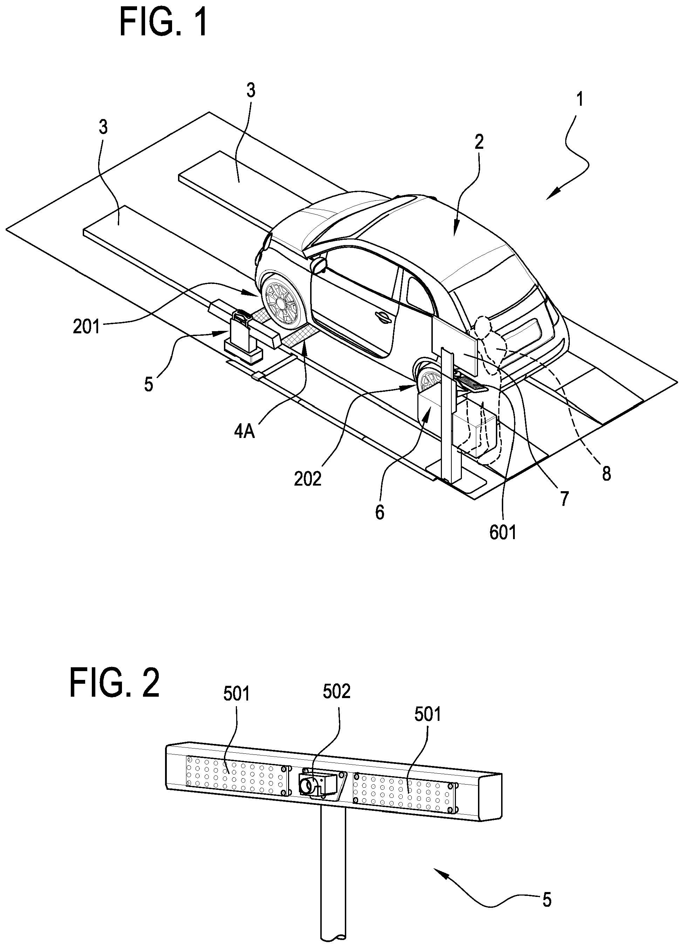

- Figure 1 shows a perspective view of a checking apparatus according to this description;
- Figure 2 illustrates an optical device of the apparatus of Figure 1;

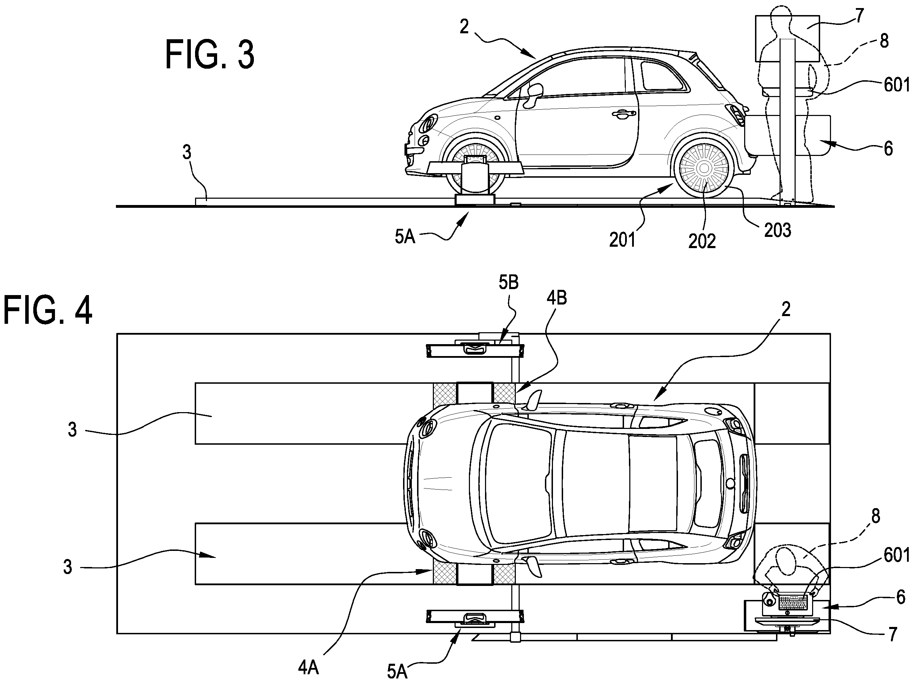

- Figure 3 is a side view of the apparatus of Figure 1;
- Figure 4 is a top view of the apparatus of Figure 1;

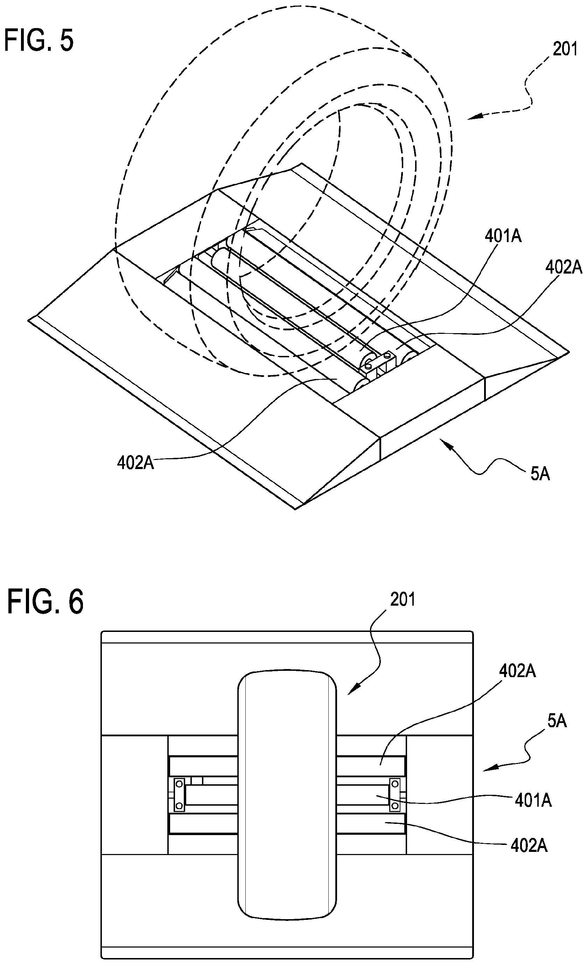

- Figure 5 shows a perspective view of a check station of the apparatus of Figure 1;
- Figure 6 shows a top view of the check station of Figure 5;

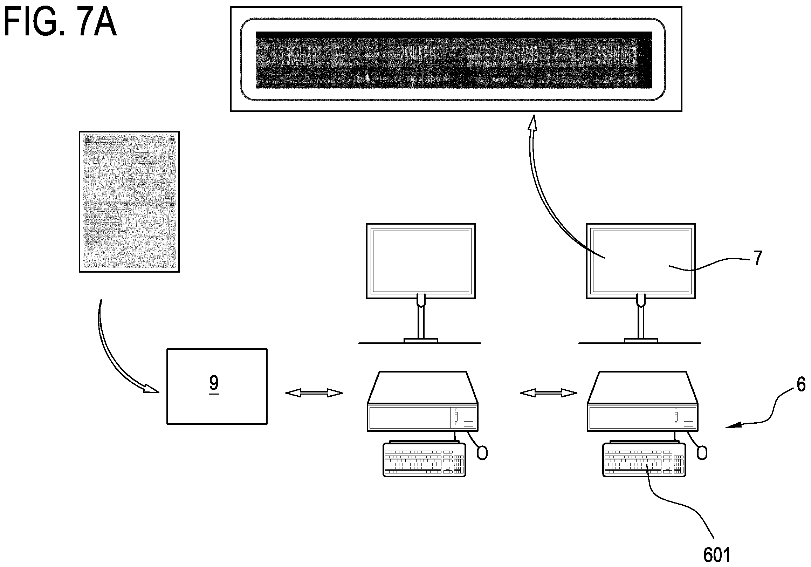

- Figure 7A schematically illustrates some operational aspects of an embodiment of the method of this description;

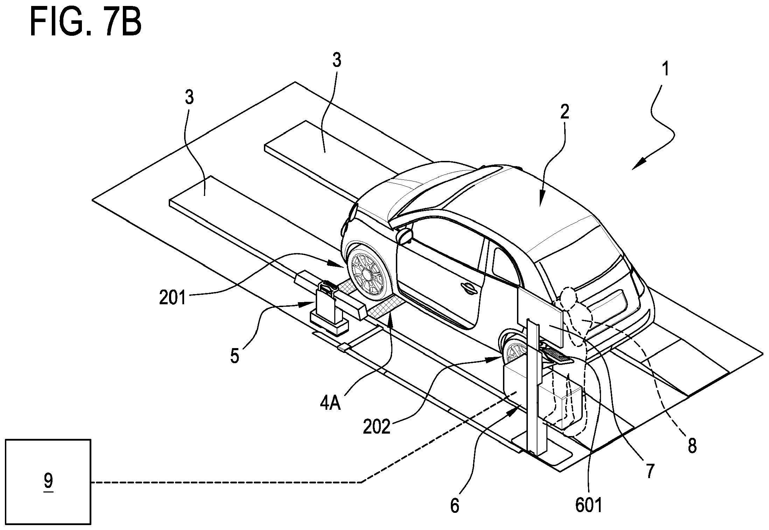

- Figure 7B illustrates an embodiment of the apparatus of Figure 1.

The numeral 1 in the drawings denotes a checking apparatus.

The numeral 2 denotes a vehicle, which is provided with wheels 201. Each wheel 201 includes a rim 202 and a tyre 203 coupled to the rim 202.

The apparatus 1 is an apparatus used for checking the wheels 201 of the vehicle 2 and, in particular, for checking the tyres 203 on the wheels 202 of the vehicle 2.

The apparatus 1 may include at least one track 3 for contact with a wheel 201; preferably, the apparatus 2 includes two tracks 3, which are surmountable by the wheels 201 of the vehicle 2. The tracks 3 are oriented along a longitudinal direction. In one embodiment, there are two tracks 3 running to each other. In some possible embodiments, the tracks 3 may be laid directly on the floor or they form part of the frame of a vehicle lift.

The apparatus 1 includes at least one check station. Preferably, the apparatus includes a first check station 4A and a second check station 4B. In the embodiment described hereinafter, the apparatus has two check stations (and two tracks 3) without thereby limiting the scope of the patent, it being understood that the features described for each check station also apply to an embodiment in which the apparatus has only one check station (and only one track 3).

The first and second check stations 4A, 4B are located long respective tracks 3. Each check station 4A, 4B may be located above the respective track 3 or in a break in the track.

The first and second check stations 4A, 4B are aligned along an axis transverse to the longitudinal direction and perpendicular to the tracks 3.

The first and second check stations 4A, 4B define a possible first operating position for the vehicle 2, where two vehicle wheels (a first and a second wheel) on a first axle are positioned in the first and second check stations 4A, 4B (and, in general, all the wheels are resting on the tracks 3 or aligned therewith), and a possible second operating position for the vehicle 2, where two vehicle wheels (a third and a fourth wheel) on a second axle are positioned in the first and second check stations 4A, 4B (and, in general, all the wheels are resting on the tracks 3 or aligned therewith).

The apparatus 1 comprises at least a first optical device 5A. In a (preferred) embodiment (which this description hereinafter concentrates on, without thereby limiting the invention), the apparatus also comprises a second optical device 5B.

In a (preferred) embodiment, the first optical device 5A is located at a fixed position relative to the first check station 4A. In an alternative embodiment, the first optical device 5A is movable to different positions - for example, beside the first check station 4A and beside the second check station 4B.

The first and second optical devices 5A, 5B are each positioned beside a corresponding track 3; more specifically, the first and second optical devices 5A, 5B are each positioned beside a corresponding check station 4A, 4B.

In one embodiment, the first and second optical devices 5A, 5B are each positioned on the outside of the tracks 3 (outside the check stations 4A, 4B); the first and second optical devices 5A, 5B are positioned on opposite sides of the tracks 3 (of the check stations 4A, 4B).

At the first operating position, the wheels 201 of the first axle of the vehicle 2 are positioned on corresponding stretches of the tracks 3, where the first and second optical devices 5A, 5B are positioned laterally of (to face) those stretches of the tracks.

In one embodiment, those stretches of the tracks are occupied (or surmounted) by the check stations 4A, 4B.

The first and second optical devices 5A, 5B are configured to capture image information from the first and second wheels resting on the aforesaid stretches of the tracks at the first operating position of the vehicle.

The apparatus 1 also comprises a control unit 6. The control unit 6 may include a computer, for example. Generally speaking, the control unit includes a processor and a memory.

The control unit 6 is connected to the at least one first and one second optical device 5A, 5B. The control unit 6 is connected to the at least one first and one second optical device 5A, 5B to drive them. The control unit 6 is connected to the at least one first and one second optical device 5A, 5B to receive image information (data) captured by the optical devices 5A, 5B themselves.

The control unit 6 comprises at least one screen 7. The screen 7 is a display configured to display images based on digital image information.

The screen 7 is connected to the control unit 6. The screen 7 is connected (directly or through the control unit 6) to the at least one first and one second optical device 5A, 5B.

The control unit 6 is programmed to display on the screen 7 (for each of the first and second wheels 201, in at least one embodiment), the image information received from the at least one optical device (the first and second optical devices 5A, 5B, in at least one embodiment).

The control unit 6 is programmed to display the image information on the screen 7 in real time.

Thus the screen 7 provides a user 8 (for example, a tyre mechanic or the technical supervisor of an overhaul line) with image data representing an identification code appearing on the tyres 203 to indicate their type.

The apparatus 1 comprises at least a first power-driven roller 401A configured to rotationally drive at least one of the wheels of the vehicle 2 positioned at the first operating position. The first power-driven roller 401A forms part at least of the first check station 4A.

There is a second power-driven roller 401B and the second power-driven roller 401B forms part of the second check station 4B. Alternatively, the apparatus 1 comprises at least two rollers which are power driven independently and which form part of the first and the second check station, 4A, 4B, respectively. In such case, when the vehicle 2 is at the first operating position, the first wheel surmounts the first power-driven roller 401A (to be set in rotation about its own axis) and the second wheel surmounts the second power-driven roller 401B (to be set in rotation about its own axis). In one embodiment, the two power-driven rollers 401A, 401B can be operated independently of each other by the user; in a non-limiting example embodiment, the two power-driven rollers 401A, 401B are connected to the control unit 6 through which they are controlled.

In a possible embodiment, the first power-driven roller 401A forms part of both the first and the second check station 4A, 4B. In such case, when the vehicle 2 is at the first operating position, the first and the second wheel surmount the first power-driven roller 401A (each to be set in rotation about its own axis).

In one embodiment, the at least one first power-driven roller 401A is associated with an auxiliary roller 402A, mounted parallel to the first power-driven roller 401A and spaced transversely therefrom in such a way that the vehicle wheel rests on both rollers (the power-driven one and the auxiliary one) when the vehicle 2 is at the first operating position. In a possible embodiment, the auxiliary roller 402A is idle; alternatively, the auxiliary roller 402A might also be power-driven to facilitate rotational driving of the wheel.

In the embodiments described above, the first and second check stations 4A, 4B are each equipped with an auxiliary roller 402A, 402B (either power-driven or not).

The aforesaid rollers (power-driven and auxiliary) are mounted transversely to the tracks 3; the rollers are substantially aligned (along the transverse axis) with the first and second optical devices 5A, 5B.

In one embodiment, the apparatus 1 comprises control means to start and stop the at least one first power-driven roller 401A (or the first and second power-driven rollers 401A, 401B) in response to corresponding user commands.

In one embodiment, the first and second rollers are power driven independently and may be controlled independently by the control means. The control means may be integrated in the control unit 6 or they may be separate from it.

In one embodiment, the first and second rollers are power driven in such a way as to be able to reverse their rotation direction through the control means.

In one embodiment, there are two (or more) auxiliary rollers 402A for each power-driven roller 401A. In one embodiment, the check station 4A comprises a system of rollers formed by two auxiliary rollers 402A and one power-driven roller 401A interposed between the two auxiliary rollers 402A.

In one embodiment, the (or each) check station 4A has a frame which defines a housing in which the respective rollers are mounted. The frame forms part of the track 3, is fixed to it or is built into it.

In one embodiment, the control unit 6 is configured to process (in real time) the image data captured by the optical devices 5. Processing may occur before or after the related images are displayed on the screen 7.

In one embodiment, the control unit 6 is configured to process an image displayed on the screen 7, by means of one or more of the following actions:
- modifying the brightness or contrast parameters of the image;
- rotating the image;
- enlarging the image. As regards the at least one first optical device 5A (or each of the optical devices 5A, 5B), attention is drawn to the following.

In one embodiment, the at least one first optical device 5A includes one or more illuminators 501. The illuminators 501 are configured to illuminate at least part of a sidewall of the tyre 203.

In one embodiment, the control unit 6 is configured to control the optical device 5A (or each of the optical devices 5A, 5B), by means of one or more of the following actions:
- modifying the aperture of a diaphragm included in the optical device;
- modifying the exposure time;
- modifying the illumination time;
- modifying the illumination intensity;
- modifying the focus.

It should be noted that each tyre 203 has a tread and two opposite sidewalls located laterally of the tread. One of the sidewalls is visible to the respective optical device 5A when the corresponding wheel 201 is positioned in the respective check station 4A.

In one embodiment, the at least one first optical device 5A includes at least one video camera 502 (or picture camera).

In one possible embodiment, the at least one first optical device 5A includes a single camera 502, or a pair of cameras in stereo configuration, and one or more illuminators 501.

In one embodiment, the one or more illuminators 501 are configured to illuminate the sidewall of the tyre at least in a first illumination condition and in a second illumination condition different from the first illumination condition.

In one embodiment, the at least one first optical device 5A is positioned, relative to the corresponding check station 4A, in such a way as to see (to frame in the image captured) a limited part of the sidewall of the respective tyre; in combination with the power-driven rollers, as a function of the angular movement of the wheel about its axis, that part of the sidewall of the respective tyre framed by the optical device 5A moves angularly along the profile of the sidewall as a function of wheel rotation. Alternatively, the at least one first optical device 5A is positioned, relative to the corresponding check station 4A, in such a way as to see (to frame in the image captured) the entire sidewall of the respective tyre.

The control unit 6 is programmed to capture, in the first illumination condition, a first auxiliary image of at least one part of the sidewall of the tyre 203 and, in the second illumination condition, a second auxiliary image of the at least one part of the sidewall of the tyre 203, obtained in different illumination conditions.

The control unit 6 is programmed to process the first and second auxiliary images (for example by comparing them) to derive the image information displayed on the screen. This makes it possible to produce particularly clear images of the identification codes printed on the tyres to indicate their type.

The image data captured and, if necessary, processed can be stored by the control unit 6.

This enables the control unit 6 to simultaneously display on the screen 7 images both of the wheels on the first axle and of the wheels on the second axle, where the images of the wheels on the first and second axles are captured at different times (when the vehicle 2 is at the first operating position and then moved to the second operating position).

Thus, the control unit is programmed to display (simultaneously) on the screen 7 (in real time) image data representing the identification codes printed on the tyres 203 of the first, second, third and fourth wheels of the vehicle 2.

In one embodiment, the image data stored by the control unit 6 are uploaded to a network (which may be a local network or a worldwide network). That way, in the event of an audit by an authority at a higher level, it is particularly easy to document the fact that procedures have been performed correctly.

This description also provides a method for checking the tyres on the wheels 201 of the vehicle 2.

The method comprises a step of positioning the vehicle 2 at the first operating position.

When the vehicle is at the first operating position, there is a step of capturing image information from a sidewall of the tyre of the first and second wheels, using optical devices 5 which are mounted on the floor or are integral with a structure which the check stations are also integral with.

The method also comprises a step of displaying in real time the image information on a screen in order to provide a user with image data representing an identification code printed on the tyres to indicate their type; this is done for both the first and the second wheel.

While the information is being captured, the vehicle 2 is, in one embodiment, stationary at the first operating position.

In one embodiment, capturing (and displaying) is carried out concurrently with a step of rotating each wheel about its own axis of rotation. Rotation is imparted to the wheels by means (belts or power-driven rollers) which are operatively in contact with (gripping) the tyre tread in such a way as to drive the wheel in rotation.

In one embodiment, the method includes a step of controlling the movement of the rollers in response to commands issued by the user 8 to enable the user to start and stop the rotation of the wheels and, if necessary, to reverse the rotation direction.

That way, operatively, the user 8 causes each wheel to rotate until an image including the identification code is displayed on the screen 7; at that point, the user 8 can save the image; it is also possible to display (and, if necessary, process) the image in real time in order to extract from it the information relating to the tyre mounted on the wheel.

In one embodiment, the method comprises a step of processing (in real time) the image displayed on the screen 7, by means of one or more of the following actions:
- modifying the brightness or contrast parameters of the image;
- rotating the image;
- enlarging the image.

In one embodiment, the method comprises a step of controlling the optical device 5A (or each of the optical devices 5A, 5B), by means of one or more of the following actions:
- modifying the aperture of the diaphragm of the optical device;
- modifying the exposure time;
- modifying the illumination time;
- modifying the illumination intensity;
- modifying the focus.

In one embodiment, the method includes a step of capturing a first and a second image of at least one part of the sidewall of the tyre, forming a first and a second auxiliary image; the first and second auxiliary images are captured under different illumination conditions.

The method also comprises a step of jointly processing the first and second auxiliary images to derive the image information displayed on the screen.

In one embodiment, the method includes a step of accessing a database 9 through the control unit 6. The database contains archive data representing one or more type of tyres associated with the vehicle being inspected. The database 9 might be contained in the memory of the control unit 6 or it might reside in an external memory or in a remote server accessible by the control unit 6 through the Internet.

In one embodiment, the method includes a step of displaying the archive data on the screen 7 together with the image information.

The method also comprises storing the image information captured for the sidewalls of the first and second wheels; the method then allows capturing further image information relating to sidewalls of the tyres of the third and fourth wheels using the first and second optical devices (when the vehicle is at the second operating position).

In one embodiment, the method also comprises storing the image information captured for the sidewalls of the third and fourth wheels.

The method thus allows displaying on the screen 7 (simultaneously) images of the sidewalls or parts thereof of all the wheels, showing the identification codes of the tyres; if necessary, together with an image of the vehicle registration document or a graphical interface containing the information regarding approved tyre types.

In one embodiment, the method includes, for at least one of the wheels positioned in the first and second check stations, a step of deriving a depth parameter representing the depth of the tyre tread.

In one embodiment, the method includes, for at least one of the wheels positioned in the first and second check stations, a step of deriving a pressure parameter representing the tyre inflation pressure.

It should be noted that, in one embodiment, the control unit 6 includes an interface 601 configured to interact with the user 8 to give instructions to the control unit 6. In one embodiment, the interface 601 comprises a keyboard but, in addition or alternatively, it might also include a mouse or other substantially known interface components (and/or the screen 7 might be touch sensitive).

As regards controlling the operation of the power-driven rollers 401A, 401B (and, if provided, the auxiliary rollers 402A, 402B), the apparatus 1 includes pedals or other components connected to an inverter or other drive; in one embodiment, the interface 601 also acts as a tool for controlling the rollers.

## Claims

1. A method for checking the tyres (203) on the wheels (201) of a vehicle (2) **characterized in that** it comprises the following steps:
- when the vehicle (2) is at a first operating position, where a first and a second wheel on one of the vehicle axles are positioned at a first and a second check station (4A, 4B), respectively, located along two corresponding tracks (3) running parallel to each other and oriented in a longitudinal direction,
rotating each first and second wheel about its own axis of rotation by means of rollers (401A, 401B) which grip the corresponding tyres (203), and
capturing image information relating to a sidewall of the tyre (503) of the first and the second wheel, using at least a first and a second optical device (5A, 5B) located on opposite sides of the tracks (3) and oriented towards each other;
- for each of the first and second wheels, displaying the image information on a screen (7) in real time, in order to provide a user (8) with image data representing an identification code printed on the tyres (203) to indicate their type.

2. The method according to claim 1, wherein the vehicle (2) is stationary at the first operating position during capturing and displaying of the image information.

3. The method according to either of the preceding claims, wherein the first and second optical devices (5A, 5B) see a limited part of the respective tyre sidewall moving angularly along a profile of the sidewall as a function of the rotation of the wheel (201).

4. The method according to claim 3, comprising a step of controlling the operation of the rollers (401A, 401B) in response to commands issued by the user (8) to enable the user to start and stop the rotation of the wheels (201).

5. The method according to any one of the preceding claims, comprising a step of adjusting in real time the image displayed on the screen (7), by means of one or more of the following actions:
- modifying the brightness or contrast parameters of the image;
- rotating the image;
- enlarging the image.

6. The method according to any one of the preceding claims, wherein the capturing step comprises capturing a first and a second auxiliary image of at least one part of the sidewall of the tyre (203) in different illumination conditions and processing the first and second auxiliary images by comparing them to derive the image information displayed on the screen (7).

7. The method according to any one of the preceding claims, comprising a step of accessing a database (9) containing archive data representing one or more types of tyres associated with the vehicle (2) being inspected and a step of displaying the archive data on the screen (7) together with the image information.

8. The method according to any one of the preceding claims, comprising the following steps:
- when the vehicle (2) is at a second operating position, where a third and a fourth wheel of another of the vehicle axles are positioned, respectively, at the first and second check stations, capturing image information relating to a sidewall of the tyres (203) of the first and second wheels, using the first and second optical devices (5A, 5B);
- for each of the third and fourth wheels, displaying the image information on the screen (7) in real time, in order to provide the user (8) with image data representing an identification code printed on the tyres to indicate their type.

9. The method according to any one of the preceding claims, comprising one or more of the following steps for at least one of the wheels (201) positioned in the first and second check stations (4A, 4B):
- deriving a depth parameter representing the depth of the tread of the tyre (203);
- deriving a pressure parameter representing the inflation pressure of the tyre (203).

10. An apparatus (1) for checking the tyres (203) of a vehicle (2), comprising:
- two tracks (3) for contact with the vehicle tyres (203), running parallel to each other and oriented in a longitudinal direction;
- at least a first and a second optical device (5A, 5B) positioned on the outside of the tracks (3) on opposite sides, in proximity to, and directed towards, corresponding stretches of the tracks (3) in order to capture image information of a first wheel and a second wheel on one of the vehicle axles, resting on the aforesaid stretches of the tracks (3) at a first operating position of the vehicle;
- a control unit (6) connected to the at least one first and one second optical device (5A, 5B) to drive them;
**characterized in that** it comprises:
- at least one screen (7) connected to the at least one first and one second optical device (5A, 5B) and to the control unit (6), wherein the control unit (6) is programmed to display the image information on the screen (7) in real time for each of the first and second wheels, in order to provide a user (8) with image data representing an identification code printed on the tyres to indicate their type;
- a first and a second power-driven roller (401A, 401B) positioned along the first and second tracks (3) and respectively oriented transversely to the tracks in substantial alignment with the first and the second optical device (5A, 5B) to be surmounted by the first and the second wheel of the vehicle positioned at the first operating position.

11. The apparatus (1) according to claim 10, wherein the control unit (6) is connected to the first and second power-driven rollers (401A, 401B) and is configured to start and stop the first and second power-driven rollers (401A, 401B) in response to corresponding user commands.

12. The apparatus according to claim 11, wherein the first and second power-driven rollers (401A, 401B) are power driven independently and wherein the control unit (6) is configured to start and stop the first and second power-driven rollers (401A, 401B) independently of each other.

13. The apparatus (1) according to any one of claims 10 to 12, wherein the control unit (6) is configured to adjust an image displayed on the screen (7) in real time, by means of one or more of the following actions:
- modifying the brightness or contrast parameters of the image;
- rotating the image;
- enlarging the image.

14. The apparatus (1) according to any one of claims 10 to 13, wherein the first and second optical devices (5A, 5B) each include one or more illuminators (501) configured to illuminate at least one part of the sidewall of the tyre (503) in a first illumination condition and in a second illumination condition different from the first illumination condition, and wherein the control unit (6) is programmed to capture, in the first illumination condition, a first auxiliary image of at least one part of the sidewall of the tyre and, in the second illumination condition, a second auxiliary image of the at least one part of the sidewall of the tyre, obtained in different illumination conditions, and to process the first and second auxiliary images by comparing them, in order to derive the image information displayed on the screen (7).

15. The apparatus (1) according to any one of claims 10 to 14, wherein the control unit (6) is programmed to display corresponding image information on the screen (7) in real time for a third and a fourth wheel mounted on another vehicle axle and resting on the aforesaid stretches of the tracks (3) at a second operating position of the vehicle, in order to provide the user with image data on the screen (7) representing the identification code printed on the tyres of the first, second, third and fourth wheels of the vehicle (2).

## Patentansprüche

1. Verfahren zur Prüfung von Reifen (203) an den Rädern (201) eines Fahrzeugs (2), **dadurch gekennzeichnet, dass** es die folgenden Schritte umfasst:
- wenn sich das Fahrzeug (2) in einer ersten Betriebsposition befindet, in der ein erstes und ein zweites Rad an einer der Fahrzeugachsen jeweils an einer ersten und einer zweiten Prüfstation (4A, 4B) positioniert sind, die sich entlang zweier entsprechender Spuren (3) befinden, die parallel zueinander verlaufen und in Längsrichtung orientiert sind,
Drehen jedes ersten und zweiten Rads um seine eigene Drehachse mittels Rollen (401A, 401B), die die entsprechenden Reifen (203) ergreifen, und
Aufnehmen von Bildinformationen, die sich auf eine Seitenwand des Reifens (503) des ersten und des zweiten Rads beziehen, unter Verwendung von mindestens einer ersten und einer zweiten optischen Einrichtung (5A, 5B), die sich auf gegenüberliegenden Seiten der Spuren (3) befinden und aufeinander orientiert sind;
- Anzeigen der Bildinformationen für jedes der ersten und zweiten Räder in Echtzeit auf einem Bildschirm (7), um einem Benutzer (8) Bilddaten bereitzustellen, die einen auf den Reifen (203) aufgedruckten Identifizierungscode darstellen, um deren Typ anzuzeigen.

2. Verfahren nach Anspruch 1, wobei das Fahrzeug (2) beim Aufnehmen und Anzeigen der Bildinformationen an der ersten Betriebsposition stillsteht.

3. Verfahren nach einem der vorhergehenden Ansprüche, wobei die erste und die zweite optische Einrichtung (5A, 5B) einen begrenzten Teil der jeweiligen Reifenseitenwand ansehen, der sich winkelmäßig entlang eines Profils der Seitenwand als eine Funktion der Drehung des Rads (201) bewegt.

4. Verfahren nach Anspruch 3, umfassend einen Schritt zum Steuern des Betriebs der Rollen (401A, 401B) als Reaktion auf Befehle, die vom Benutzer (8) ausgegeben werden, um dem Benutzer zu ermöglichen, die Drehung der Räder (201) zu starten und zu stoppen.

5. Verfahren nach einem der vorhergehenden Ansprüche, umfassend einen Schritt zum Einstellen des auf dem Bildschirm (7) angezeigten Bilds in Echtzeit mittels einer oder mehrerer der folgenden Aktionen:
- Ändern der Helligkeits- oder Kontrastparameter des Bilds;
- Drehen des Bilds;
- Vergrößern des Bilds.

6. Verfahren nach einem der vorhergehenden Ansprüche, wobei der Aufnahmeschritt das Aufnehmen eines ersten und eines zweiten Hilfsbilds von mindestens einem Teil der Seitenwand des Reifens (203) unter verschiedenen Beleuchtungsbedingungen und das Verarbeiten des ersten und des zweiten Hilfsbilds durch deren Vergleichen umfasst, um die auf dem Bildschirm (7) angezeigten Bildinformationen abzuleiten.

7. Verfahren nach einem der vorhergehenden Ansprüche, umfassend einen Schritt zum Zugreifen auf eine Datenbank (9), die Archivdaten enthält, die einen oder mehrere Reifentypen darstellen, die mit dem Fahrzeug (2), der gerade inspiziert wird, assoziiert sind, und einen Schritt zum Anzeigen der Archivdaten auf dem Bildschirm (7) zusammen mit der Bildinformationen.

8. Verfahren nach einem der vorhergehenden Ansprüche, umfassend die Schritte von:
- wenn sich das Fahrzeug (2) in einer zweiten Betriebsposition befindet, in der ein drittes und ein viertes Rad einer der anderen Fahrzeugachsen jeweils an der ersten und der zweiten Prüfstation positioniert sind, Aufnehmen von Bildinformationen, die sich auf eine Seitenwand der Reifen (203) der ersten und zweiten Räder beziehen, unter Verwendung von der ersten und der zweiten optischen Einrichtung (5A, 5B);
- Anzeigen der Bildinformationen auf dem Bildschirm (7) in Echtzeit für jedes der dritten und vierten Räder, um dem Benutzer (8) Bilddaten bereitzustellen, die einen auf den Reifen aufgedruckten Identifizierungscode darstellen, um deren Typ anzuzeigen.

9. Verfahren nach einem der vorhergehenden Ansprüche, umfassend einen oder mehrere der folgenden Schritte für mindestens eines der Räder (201), die in der ersten und der zweiten Prüfstation (4A, 4B) positioniert sind:
- Ableiten eines Tiefenparameters, der die Tiefe der Lauffläche des Reifens (203) darstellt;
- Ableiten eines den Reifendruck darstellenden Druckparameters (203).

10. Vorrichtung (1) zur Prüfung von Reifen (203) eines Fahrzeugs (2), umfassend:
- zwei Spuren (3) für den Kontakt mit den Fahrzeugreifen (203), die parallel zueinander verlaufen und in Längsrichtung orientiert sind;
- mindestens eine erste und eine zweite optische Einrichtung (5A, 5B), die an der Außenseite der Spuren (3) auf gegenüberliegenden Seiten in der Nähe von entsprechenden Strecken der Spuren (3) positioniert und darauf gerichtet sind, um Bildinformationen eines ersten Rads und eines zweiten Rads an einer der Fahrzeugachsen, die auf den vorgenannten Strecken der Spuren (3) in einer ersten Betriebsposition des Fahrzeugs ruhen, aufzunehmen;
- eine Steuereinheit (6), die mit der mindestens einen ersten und einer zweiten optischen Einrichtung (5A, 5B) verbunden ist, um sie anzutreiben;
**dadurch gekennzeichnet, dass** sie umfasst:
- mindestens einen Bildschirm (7), der mit der mindestens einen ersten und einer zweiten optischen Einrichtung (5A, 5B) und mit der Steuereinheit (6) verbunden ist, wobei die Steuereinheit (6) so programmiert ist, dass sie die Bildinformationen auf dem Bildschirm (7) in Echtzeit für jedes der ersten und zweiten Räder anzeigt, um einem Benutzer (8) Bilddaten bereitzustellen, die einen auf den Reifen aufgedruckten Identifizierungscode darstellen, um deren Typ anzuzeigen;
- eine erste und eine zweite kraftgetriebene Rolle (401A, 401B), die entlang der ersten und der zweiten Spur (3) positioniert sind und jeweils quer zu den Spuren in wesentlicher Ausrichtung mit der ersten und der zweiten optischen Einrichtung (5A, 5B) orientiert sind, um von dem ersten und dem zweiten Rad des in der ersten Betriebsposition positionierten Fahrzeugs überragt zu werden.

11. Vorrichtung (1) nach Anspruch 10, wobei die Steuereinheit (6) mit der ersten und der zweiten kraftangetriebenen Rolle (401A, 401B) verbunden ist und konfiguriert ist, um die erste und die zweite kraftgetriebene Rolle (401A, 401B) als Reaktion auf entsprechende Benutzerbefehle zu starten und zu stoppen.

12. Vorrichtung nach Anspruch 11, wobei die erste und die zweite kraftangetriebene Rolle (401A, 401B) unabhängig voneinander kraftgetrieben sind und wobei die Steuereinheit (6) konfiguriert ist, um die erste und die zweite kraftgetriebene Rolle (401A, 401B) unabhängig voneinander zu starten und zu stoppen.

13. Vorrichtung (1) nach einem der Ansprüche 10 bis 12, wobei die Steuereinheit (6) konfiguriert ist, um ein auf dem Bildschirm (7) angezeigtes Bild in Echtzeit mittels einer oder mehrerer der folgenden Aktionen einzustellen:
- Ändern der Helligkeits- oder Kontrastparameter des Bilds;
- Drehen des Bilds;
- Vergrößern des Bilds.

14. Vorrichtung (1) nach einem der Ansprüche 10 bis 13, wobei die erste und die zweite optische Einrichtung (5A, 5B) jeweils eine oder mehrere Illuminatoren (501) einschließen, die so konfiguriert sind, dass sie mindestens einen Teil der Seitenwand des Reifens (503) in einem ersten Beleuchtungszustand und in einem zweiten Beleuchtungszustand, der sich von dem ersten Beleuchtungszustand unterscheidet, beleuchten, und wobei die Steuereinheit (6) so programmiert ist, dass sie im ersten Beleuchtungszustand ein erstes Hilfsbild von mindestens einem Teil der Seitenwand des Reifens und, in dem zweiten Beleuchtungszustand, ein zweites Hilfsbild des mindestens einen Teils der Seitenwand des Reifens, das unter verschiedenen Beleuchtungsbedingungen erhalten wird, aufnimmt und das erste und das zweite Hilfsbild durch deren Vergleichen verarbeitet, um die auf dem Bildschirm angezeigten Bildinformationen (7) abzuleiten.

15. Vorrichtung (1) nach einem der Ansprüche 10 bis 14, wobei die Steuereinheit (6) programmiert ist, um entsprechende Bildinformationen auf dem Bildschirm (7) in Echtzeit für ein drittes und ein viertes Rad anzuzeigen, montiert an einer anderen Fahrzeugachse und ruhend auf den vorgenannten Strecken der Spuren (3) in einer zweiten Betriebsposition des Fahrzeugs, um dem Benutzer Bilddaten auf dem Bildschirm (7) bereitzustellen, die den auf den Reifen des ersten, zweiten, dritten und vierten Rads des Fahrzeugs (2) aufgedruckten Identifizierungsscode darstellen.

## Revendications

1. Procédé de contrôle des pneus (203) sur les roues (201) d'un véhicule (2), **caractérisé en ce qu'**il comprend les étapes suivantes :
- lorsque le véhicule (2) se trouve dans une première position fonctionnelle où une première et une seconde roue sur un des essieux du véhicule sont positionnées à un premier et un second poste de contrôle (4A, 4B), respectivement, situés le long de deux pistes (3) correspondantes parallèles l'une à l'autre et orientées dans une direction longitudinale,
faire tourner la première et la seconde roue autour de son propre axe de rotation au moyen de rouleaux (401A, 401B) qui saisissent les pneus (203) correspondants,
et capturer des informations d'image concernant un flanc du pneu (503) de la première et de la seconde roue, en utilisant au moins un premier et un second dispositif optique (5A, 5B) situés sur des côtés opposés des pistes (3) et orientés l'un vers l'autre ;
- pour les première et seconde roues, afficher en temps réel les informations d'image sur un écran (7) afin de fournir à un utilisateur (8) des données d'image représentant un code d'identification imprimé sur les pneus (203) pour indiquer leur type.

2. Procédé selon la revendication 1, dans lequel le véhicule (2) est stationnaire dans la première position fonctionnelle pendant la capture et l'affichage des informations d'image.

3. Procédé selon l'une quelconque des revendications précédentes, dans lequel les premier et second dispositifs optiques (5A, 5B) repèrent une partie limitée du flanc du pneu respectif se déplaçant angulairement le long d'un profil du flanc en fonction de la rotation de la roue (201).

4. Procédé selon la revendication 3, comprenant une étape de contrôle du fonctionnement des rouleaux (401A, 401B) en réponse aux commandes délivrées par l'utilisateur (8) pour permettre à l'utilisateur de démarrer et d'arrêter la rotation des roues (201).

5. Procédé selon l'une quelconque des revendications précédentes, comprenant une étape consistant à régler, en temps réel, l'image affichée à l'écran (7), au moyen d'une ou plusieurs des actions suivantes :
- modifier les paramètres de luminosité ou de contraste de l'image ;
- tourner l'image ;
- élargir l'image.

6. Procédé selon l'une quelconque des revendications précédentes, dans lequel l'étape de capture comprend la capture d'une première et d'une seconde image auxiliaire d'au moins une partie du flanc du pneu (203) dans des conditions différentes d'éclairage et le traitement des première et seconde images auxiliaires en les comparant pour déduire les informations d'image affichées à l'écran (7).

7. Procédé selon l'une quelconque des revendications précédentes, comprenant une étape consistant à accéder à une base de données (9) contenant des données archivées représentant un ou plusieurs types de pneus associés au véhicule (2) étant inspecté et une étape consistant à afficher les données archivées à l'écran (7) avec les informations d'image.

8. Procédé selon l'une quelconque des revendications précédentes, comprenant les étapes suivantes :
- lorsque le véhicule (2) se trouve dans une seconde position fonctionnelle où une troisième et une quatrième roue de l'autre des essieux du véhicule sont positionnées, respectivement, aux premier et second poste de contrôle, capturer des informations d'image concernant un flanc des pneus (203) des première et seconde roues, en utilisant les premier et second dispositifs optiques (5A, 5B) ;
- pour les troisième et quatrième roues, afficher en temps réel les informations d'image à l'écran (7) afin de fournir à l'utilisateur (8) des données d'image représentant un code d'identification imprimé sur les pneus pour indiquer leur type.

9. Procédé selon l'une quelconque des revendications précédentes, comprenant une ou plusieurs des étapes suivantes pour au moins une des roues (201) positionnées dans les premier et second postes de contrôle (4A, 4B) :
- déduire un paramètre de profondeur représentant la profondeur de la bande de roulement du pneu (203) ;
- déduire un paramètre de pression représentant la pression de gonflage du pneu (203).

10. Appareil (1) de contrôle des pneus (203) d'un véhicule (2), comprenant :
- deux pistes (3) de contact pour les pneus (203) du véhicule, étant parallèles l'une à l'autre et orientées dans une direction longitudinale ;
- au moins un premier et un second dispositif optique (5A, 5B) positionnés sur l'extérieur des pistes (3) sur des côtés opposés, à proximité de, et orientés vers, des portions correspondantes des pistes (3) afin de capturer des informations d'image d'une première roue et d'une seconde roue sur un des essieux du véhicule, reposant sur les portions susmentionnées des pistes (3) en correspondance d'une première position fonctionnelle du véhicule ;
- une unité de commande (6) reliée à l'au moins un premier et un second dispositif optique (5A, 5B) pour les actionner ;
**caractérisé en ce qu'**il comprend :
- au moins un écran (7) relié à l'au moins un premier et un second dispositif optique (5A, 5B) et à l'unité de commande (6), dans lequel l'unité de commande (6) est programmée pour afficher, en temps réel, les informations d'image à l'écran (7) pour les première et seconde roues, afin de fournir à un utilisateur (8) des données d'image représentant un code d'identification imprimé sur les pneus pour indiquer leur type ;
- un premier et un second rouleau motorisés (401A, 401B), positionnés le long des première et seconde pistes (3) et respectivement orientés transversalement aux pistes substantiellement alignées avec le premier et le second dispositif optique (5A, 5B), pour être surmontés par la première et la seconde roue du véhicule positionné dans la première position fonctionnelle.

11. Appareil (1) selon la revendication 10, dans lequel l'unité de commande (6) est reliée aux premier et second rouleaux motorisés (401A, 401B) et est configurée pour démarrer et arrêter les premier et second rouleaux motorisés (401A, 401B) en réponse à des commandes correspondantes de l'utilisateur.

12. Appareil selon la revendication 11, dans lequel les premier et second rouleaux motorisés (401A, 401B) sont motorisés de façon indépendante et dans lequel l'unité de commande (6) est configurée pour démarrer et arrêter les premier et second rouleaux motorisés (401A, 401B) indépendamment l'un de l'autre.

13. Appareil (1) selon l'une quelconque des revendications de 10 à 12, dans lequel l'unité de commande (6) est configurée pour régler, en temps réel, une image affichée à l'écran (7) au moyen d'une ou plusieurs des actions suivantes :
- modifier les paramètres de luminosité ou de contraste de l'image ;
- tourner l'image ;
- élargir l'image.

14. Appareil (1) selon l'une quelconque des revendications de 10 à 13, dans lequel les premier et second dispositifs optiques (5A, 5B) incluent chacun un ou plusieurs illuminateurs (501) configurés pour éclairer au moins une partie du flanc du pneu (503) dans une première condition d'éclairage et dans une seconde condition d'éclairage différente de la première condition d'éclairage, et dans lequel l'unité de commande (6) est programmée pour capturer, dans la première condition d'éclairage, une première image auxiliaire d'au moins une partie du flanc du pneu et, dans la seconde condition d'éclairage, une seconde image auxiliaire, de l'au moins une partie du flanc du pneu, obtenue dans des conditions d'éclairage différentes, et pour traiter les première et seconde images auxiliaires en les comparant, afin de déduire les informations d'image affichées à l'écran (7).

15. Appareil (1) selon l'une quelconque des revendications de 10 à 14, dans lequel l'unité de commande (6) est programmée pour afficher, en temps réel, des informations d'image correspondantes à l'écran (7) pour une troisième et une quatrième roue montées sur un autre essieu du véhicule et reposant sur les portions susmentionnées des pistes (3) dans une seconde position de fonctionnement du véhicule, afin de fournir à l'utilisateur les données d'image à l'écran (7) représentant le code d'identification imprimé sur les pneus des première, seconde, troisième et quatrième roues du véhicule (2).
